# EUROPEAN PATENT APPLICATION

(11) **EP 4 752 999 A1**
(43) Date of publication of application: **03.06.2026**
(21) Application number: 25854507.8
(22) Date of filing: 02.07.2025
(51) Int. Cl.: H01M 10/04, H01M 10/44, H01M 10/613, H01M 10/6554, H01M 50/105

(54) **DEVICE FOR PRESSING POUCH-TYPE SECONDARY BATTERY AND METHOD FOR PRESSING POUCH-TYPE SECONDARY BATTERY USING SAME**

(30) Priority: 14.08.2024 KR 20240109257
(71) Applicant: LG Energy Solution, Ltd., Seoul 07335 (KR)
(72) Inventor: WON, Kwang Ho, Daejeon 34122 (KR); LEE, Jin Wuk, Daejeon 34122 (KR)
(74) Representative: Goddar, Heinz J.
(86) International application number: PCT/KR2025/009401
(87) International publication number: WO 2026/038694

(57) **Abstract**

Disclosed are a pouch-shaped secondary battery pressing apparatus and a pouch-shaped secondary battery pressing method using the same, and more particularly a pouch-shaped secondary battery pressing apparatus for pressing a pouch-shaped secondary battery, the pouch-shaped secondary battery including a battery case having a pocket portion to receive an electrode assembly and an extension portion to capture gas generated in an activation step, the pouch-shaped secondary battery pressing apparatus including a pair of pressing plates located so as to face one surface and the other surface of the pocket portion of the battery case and a pair of auxiliary plates located so as to face one surface and the other surface of the extension portion of the battery case, and a pouch-shaped secondary battery pressing method using the same.

## Description

### [Technical Field]

This application claims the benefit of priority to Korean Patent Application No. 10-2024-0109257 filed on August 14, 2024, the disclosure of which is incorporated herein by reference in its entirety.

The present invention relates to a pouch-shaped secondary battery pressing apparatus and a pouch-shaped secondary battery pressing method using the same, and more particularly to a pouch-shaped secondary battery pressing apparatus capable of lowering the temperature of gas generated in an activation step and a pouch-shaped secondary battery pressing method using the same.

### [Background Art]

With technological development of mobile devices and an increase in demand therefor, secondary batteries, which are capable of being charged and discharged, have been used as an energy source for various mobile devices. Secondary batteries have also attracted attention as an energy source for electric vehicles and hybrid electric vehicles presented as alternatives to existing gasoline and diesel vehicles, which use fossil fuels.

Depending on the shape of a battery case, secondary batteries are categorized into a cylindrical battery having an electrode assembly mounted in a cylindrical metal can, a prismatic battery having an electrode assembly mounted in a prismatic metal can, and a pouch-shaped battery having an electrode assembly mounted in a pouch-shaped case made of an aluminum laminate sheet.

A typical pouch-shaped secondary battery manufacturing process includes a process of inserting an electrode assembly into a receiving space of a battery case made of a laminate sheet, a process of injecting electrolyte into the battery case, a process of sealing the battery case, and a process of performing an activation step. In the activation step, a formation jig configured to press a battery cell is used.

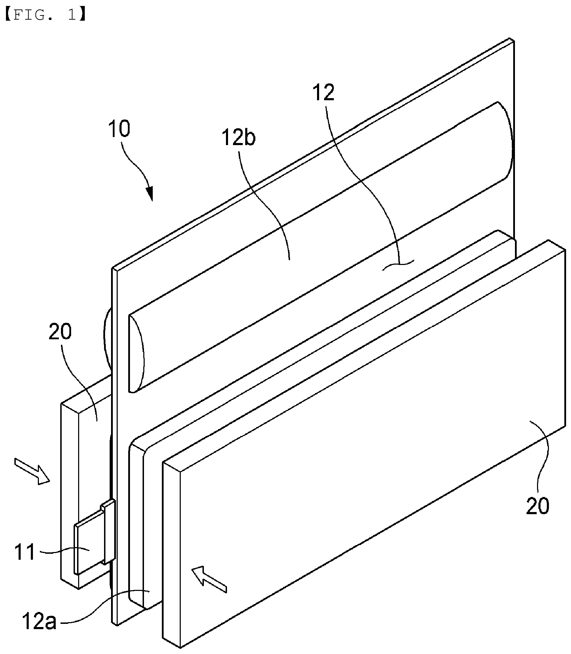

In this regard, FIG. 1 is a conceptual view of a conventional pouch-shaped secondary battery pressing apparatus. Generally, as shown in FIG. 1, a secondary battery 10 is interposed between a pair of pressing plates 20, and a step of activating the secondary battery 10 is performed while pressing a pocket portion 12a having an electrode assembly received therein using the pressing plates 20.

In the activation step, gas is generated as the result of chemical reaction between lithium and electrolyte of the secondary battery, and the gas is captured in an extension portion 12b and removed during a degassing process.

However, the extension portion 12b expands due to the gas generated in the activation step, and this expansion may lead to deformation of the pocket portion 12a, including the extension portion 12b, and consequently result in poor sealing.

The size of the extension portion 12b may be sufficiently increased to solve the aforementioned problem. In this case, however, a laminate sheet with a larger area is required, leading to another problem, such as increased manufacturing costs.

### (Prior Art Document)

(Patent Document 1) Korean Patent Application Publication No. 10-2023-0071075

### [Disclosure]

### [Technical Problem]

The present invention has been made in view of the above problems, and it is an object of the present invention to provide a pouch-shaped secondary battery pressing apparatus capable of preventing deformation of a pocket portion due to gas generated in an activation step and a secondary battery pressing method using the same.

### [Technical Solution]

A pouch-shaped secondary battery pressing apparatus according to the present invention to accomplish the above object, which is an apparatus for pressing a pouch-shaped secondary battery including a battery case (12) having a pocket portion (12a) to receive an electrode assembly and an extension portion (12b) to capture gas generated in an activation step, includes a pair of pressing plates (100) located so as to face one surface and the other surface of the pocket portion (12a) of the battery case (12) and a pair of auxiliary plates (200) located so as to face one surface and the other surface of the extension portion (12b) of the battery case (12).

Also, in the pouch-shaped secondary battery pressing apparatus according to the present invention, the pair of auxiliary plates (200) may include a cooling member.

Also, in the pouch-shaped secondary battery pressing apparatus according to the present invention, the pair of auxiliary plates (200) may include a first auxiliary plate (210) facing the one surface of the extension portion (12b) and a second auxiliary plate (220) facing the other surface of the extension portion (12b), and may be driven to press the extension portion (12b) when the extension portion expands due to gas capture.

Also, in the pouch-shaped secondary battery pressing apparatus according to the present invention, the pair of pressing plates (100) may include a first pressing plate (110) facing the one surface of the pocket portion (12a) and a second pressing plate (120) facing the other surface of the pocket portion (12a), a first driving shaft (111) may be provided on one surface of the first pressing plate (110), a second driving shaft (121) may be provided on the other surface of the second pressing plate (120), a third driving shaft (211) may be provided on one surface of the first auxiliary plate (210), and a fourth driving shaft (221) may be provided on the other surface of the second auxiliary plate (220).

Also, in the pouch-shaped secondary battery pressing apparatus according to the present invention, the first driving shaft (111), the second driving shaft (121), the third driving shaft (211), and the fourth driving shaft (221) may be independently driven.

Also, in the pouch-shaped secondary battery pressing apparatus according to the present invention, the first driving shaft (111) and the third driving shaft (211) may be driven together.

Also, the pouch-shaped secondary battery pressing apparatus according to the present invention may include a first connection shaft (212) configured to connect the first driving shaft (111) to the third driving shaft (211).

Also, in the pouch-shaped secondary battery pressing apparatus according to the present invention, the third driving shaft (211) may include a 3a guide bar (211a) extending a predetermined length from the first auxiliary plate (210), a 3b guide bar (211b) having one side fixed to the first connection shaft (212), and a first elastic member (211c) interposed between the 3a guide bar (211a) and the 3b guide bar (211b).

Also, in the pouch-shaped secondary battery pressing apparatus according to the present invention, the first elastic member (211c) may be a coil spring.

Also, in the pouch-shaped secondary battery pressing apparatus according to the present invention, the second driving shaft (121) and the fourth driving shaft (221) may be driven together.

Also, the pouch-shaped secondary battery pressing apparatus according to the present invention may include a second connection shaft (222) configured to connect the second driving shaft (121) to the fourth driving shaft (221).

Also, in the pouch-shaped secondary battery pressing apparatus according to the present invention, the fourth driving shaft (221) may include a 4a guide bar (221a) extending a predetermined length from the second auxiliary plate (220), a 4b guide bar (221b) having one side fixed to the second connection shaft (222), and a second elastic member (221c) interposed between the 4a guide bar (221a) and the 4b guide bar (221b).

Also, in the pouch-shaped secondary battery pressing apparatus according to the present invention, the second elastic member (221c) may be a coil spring.

A pouch-shaped secondary battery pressing method using the pouch-shaped secondary battery pressing apparatus includes (S1) a step of locating a secondary battery between the pair of pressing plates and (S2) an activation step of charging and discharging the secondary battery while moving the pair of pressing plates to press the secondary battery, wherein the pouch-shaped secondary battery pressing method further includes a step of locating a pair of second auxiliary plates each constituted by a cooling member on both surfaces of an extension portion of a battery case before step (S2).

Also, in the pouch-shaped secondary battery pressing method according to the present invention, in step (S2), the pair of second auxiliary plates may be in tight contact with the extension portion.

### [Advantageous Effects]

A pouch-shaped secondary battery pressing apparatus according to the present invention and a pouch-shaped secondary battery pressing method using the same have the advantage that an auxiliary plate constituted by a cooling member is provided in tight contact with one surface or the other surface of an extension portion for gas capture, whereby it is possible to reduce the volume of generated gas, which may contribute to preventing deformation of a pocket portion configured to receive an electrode assembly.

In addition, the pouch-shaped secondary battery pressing apparatus according to the present invention and the pouch-shaped secondary battery pressing method using the same have the merit that an auxiliary plate constituted by a cooling member is provided in tight contact with one surface or the other surface of an extension portion for gas capture, whereby it is possible to reduce the volume of generated gas, which may contribute to saving laminate sheets by reducing the size of the extension portion for gas collection.

### [Description of Drawings]

FIG. 1 is a conceptual view of a conventional pouch-shaped secondary battery pressing apparatus.
FIG. 2 is a perspective view of a pouch-shaped secondary battery.
FIG. 3 is a perspective view illustrating a pouch-shaped secondary battery pressing apparatus according to a first embodiment of the present invention.
FIG. 4 is a side view of the pressing apparatus shown in FIG. 3.
FIG. 5 is a perspective view illustrating a pouch-shaped secondary battery pressing apparatus according to a second embodiment of the present invention.
FIG. 6 is a side view of the pouch-shaped secondary battery pressing apparatus shown in FIG. 5 before a pressing plate and an auxiliary plate are in tight contact with a secondary battery.
FIG. 7 is a side view of the pouch-shaped secondary battery pressing apparatus shown in FIG. 5 after the pressing plate and the auxiliary plate are in tight contact with the secondary battery.

### [Best Mode]

Now, preferred embodiments of the present invention will be described in detail with reference to the accompanying drawings such that the preferred embodiments of the present invention may be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a predetermined element is included does not mean that other elements are excluded, but means that such elements may be further included unless mentioned otherwise.

Hereinafter, a pouch-shaped secondary battery pressing apparatus according to the present invention and a pouch-shaped secondary battery pressing method using the same will be described.

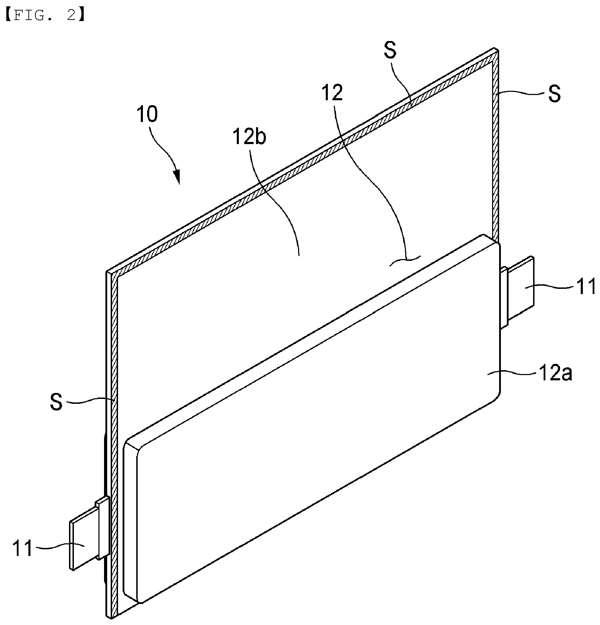

FIG. 2 is a perspective view of a pouch-shaped secondary battery. Referring to FIG. 2, the pouch-shaped secondary battery 10 may include a battery case 12 having an electrode assembly (not shown) having a pair of electrode leads 11 located opposite each other received therein and a sealed portion S provided at an edge of the battery case 12.

The electrode assembly (not shown) received in the battery case 12 may be a jelly-roll type electrode assembly, which is configured to have a structure in which a long sheet type negative electrode and a long sheet type positive electrode are wound in the state in which a separator is interposed therebetween, a stacked type electrode assembly including unit cells, each of which is configured to have a structure in which a rectangular positive electrode and a rectangular negative electrode are stacked in the state in which a separator is interposed therebetween, a stacked and folded type electrode assembly, which is configured to have a structure in which unit cells are wound using a long separation film, or a laminated and stacked type electrode assembly, which is configured to have a structure in which unit cells are stacked in the state in which a separator is interposed therebetween and are then attached to each other; however, the present invention is not limited thereto.

The positive electrode includes a positive electrode current collector and a positive electrode active material applied to each of an upper surface and a lower surface of the positive electrode current collector. The positive electrode active material may be mixed with a conductive agent and a binder, and a filler may be further added if necessary.

The negative electrode includes a negative electrode current collector and a negative electrode active material applied to each of an upper surface and a lower surface of the negative electrode current collector. The negative electrode active material may be further mixed with a conductive agent and a binder, and the negative electrode current collector may be coated with the mixture.

The separator prevents short circuit between the negative electrode and the positive electrode and allows only migration of lithium ions. It is preferable for the separator to be made of any one selected from among polyethylene, polypropylene, a dual layer of polyethylene/polypropylene, a triple layer of polyethylene/polypropylene/polyethylene, a triple layer of polypropylene/polyethylene/polypropylene, and organic fiber filter paper; however, the present invention is not limited thereto.

Meanwhile, the battery case 12 may include a pocket portion 12a configured to receive the electrode assembly and an extension portion 12b located near the pocket portion 12a to capture gas generated in an activation step.

The battery case 12 is manufactured using a laminate sheet including an outer covering layer, a metal layer, and an inner covering layer.

The inner covering layer is in direct contact with the electrode assembly, and therefore the inner covering layer must exhibit high insulation properties and high electrolytic resistance. In addition, the inner covering layer must exhibit high sealability in order to hermetically isolate the battery case from the outside, i.e., a thermally-bonded sealed portion between inner layers must exhibit excellent thermal bonding strength.

The inner covering layer may be made of a material selected from among a polyolefin-based resin, such as polypropylene, polyethylene, polyethylene acrylic acid, or polybutylene, a polyurethane resin, and a polyimide resin, which exhibit excellent chemical resistance and high sealability; however, the present invention is not limited thereto, and polypropylene, which exhibits excellent mechanical properties, such as tensile strength, rigidity, surface hardness, and impact resistance, and excellent chemical resistance, is the most preferably used.

The metal layer, which abuts the inner covering layer, corresponds to a barrier layer configured to prevent moisture or various gases from permeating into the battery from the outside. An aluminum thin film, which is lightweight and easily shapeable, may be used as a preferred material for the metal layer.

The outer covering layer is provided at the other surface of the metal layer, and the outer covering layer may be made of a heat-resistant polymer that exhibits excellent tensile strength, resistance to moisture permeation, and resistance to air transmission such that the outer covering layer exhibits high heat resistance and chemical resistance while protecting the electrode assembly. As an example, the outer covering layer may be made of nylon or polyethylene terephthalate; however, the present invention is not limited thereto.

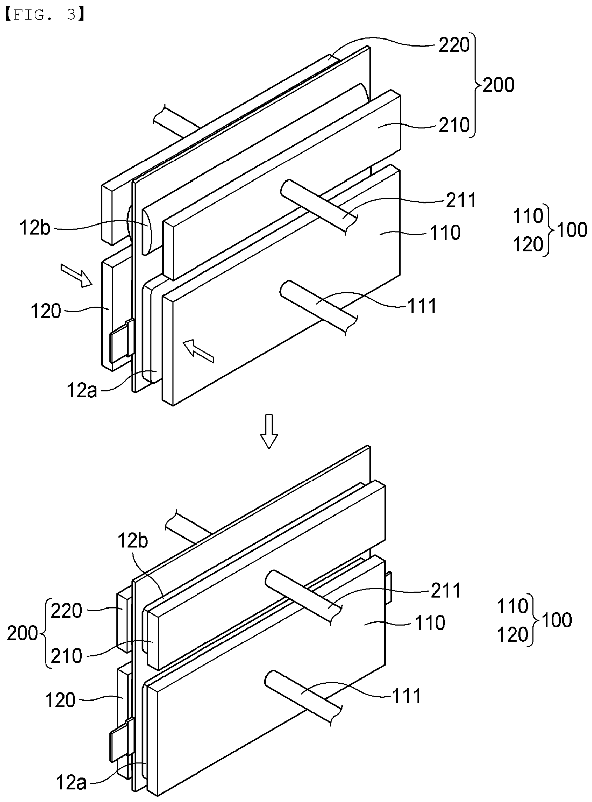

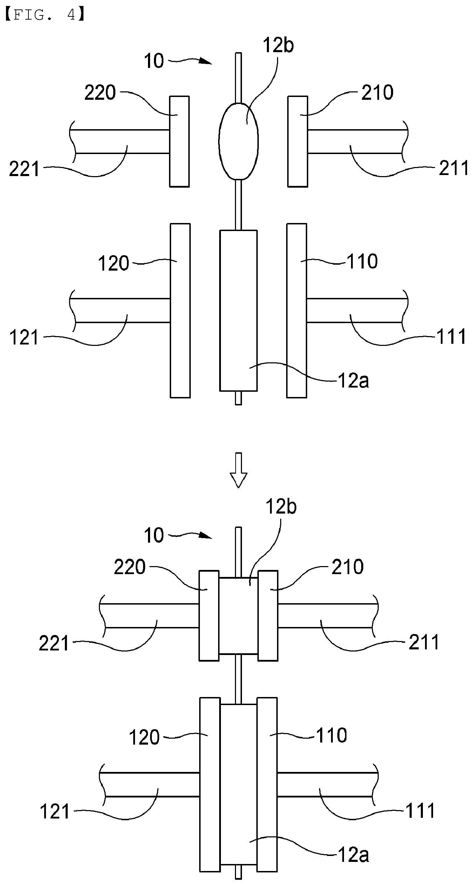

FIG. 3 is a perspective view illustrating a pouch-shaped secondary battery pressing apparatus according to a first embodiment of the present invention, and FIG. 4 is a side view of the pressing apparatus shown in FIG. 3.

The secondary battery pressing apparatus according to the first embodiment of the present invention for pressing the pouch-shaped secondary battery having the aforementioned configuration may include a pair of pressing plates 100 and a pair of auxiliary plates 200.

The pair of pressing plates 100 is located so as to face one surface and the other surface of the pocket portion 12a of the battery case 12. Specifically, the pair of pressing plates 100 includes a first pressing plate 110 located so as to face one surface of the pocket portion 12a of the battery case 12 and a second pressing plate 120 located so as to face the other surface of the pocket portion 12a of the battery case 12.

A first driving shaft 111 is provided on one surface of the first pressing plate 110, i.e., the surface of the first pressing plate that does not face one surface of the pocket portion 12a, and a separate driving means (not shown) is connected to the first driving shaft 111 so as to be operated such that the first pressing plate 110 moves toward or away from one surface of the pocket portion 12a.

In addition, a second driving shaft 121 is provided on the other surface of the second pressing plate 120, i.e., the surface of the second pressing plate that does not face the other surface of the pocket portion 12a, and a separate driving means (not shown) is connected to the second driving shaft 121 so as to be operated such that the second pressing plate 120 moves toward or away from the other surface of the pocket portion 12a.

It is preferable for the area of each of the first pressing plate 110 and the second pressing plate 120 to be sufficient to completely cover the pocket portion 12a. As these plates correspond to those generally used in an activation step for pouch-shaped secondary batteries, a more detailed description thereof will be omitted.

Next, the pair of auxiliary plates 200 will be described. The pair of auxiliary plates 200 is located so as to face one surface and the other surface of the extension portion 12b of the battery case 12. Specifically, the pair of auxiliary plates 200 includes a first auxiliary plate 210 located so as to face one surface of the extension portion 12b of the battery case 12 and a second auxiliary plate 220 located so as to face the other surface of the extension portion 12b of the battery case 12.

A third driving shaft 211 is provided on one surface of the first auxiliary plate 210, i.e., the surface of the first auxiliary plate that does not face one surface of the extension portion 12b, and a separate driving means (not shown) is connected to the third driving shaft 211 so as to be operated such that the first auxiliary plate 210 moves toward or away from one surface of the extension portion 12b.

In addition, a fourth driving shaft 221 is provided on the other surface of the second auxiliary plate 220, i.e., the surface of the second auxiliary plate that does not face the other surface of the extension portion 12b, and a separate driving means (not shown) is connected to the fourth driving shaft 221 so as to be operated such that the second auxiliary plate 220 moves toward or away from the other surface of the extension portion 12b.

Here, it is preferable for the auxiliary plate 200 be a cooling member. Specifically, it is preferable for any one of the first auxiliary plate 210 and the second auxiliary plate 220 to be a cooling member, and it is more preferable for both the first auxiliary plate 210 and the second auxiliary plate 220 to be constituted by cooling members.

Gas generated in the activation step moves to the extension portion 12b and is captured therein. When at least one of the first auxiliary plate 210 and the second auxiliary plate 220, which are operated so as to come into tight contact with the extension portion 12b, is constituted by a cooling member, the temperature of the gas captured in the extension portion 12b may be lowered.

Therefore, expansion of the extension portion 12b due to the gas may be minimized, whereby it is possible to reduce deformation of the pocket portion 12a including the extension portion 12b. Of course, when the second auxiliary plate 220 is provided, even if the size of the extension portion 12b remains the same, it is possible to capture more gas, and therefore it is possible to reduce the size of the extension portion 12b, which may also contribute to reduction in manufacturing costs through reduction in laminate sheet consumption.

Meanwhile, the cooling member constituting the first auxiliary plate 210 and the second auxiliary plate 220 is not particularly limited as long as the cooling member is in tight contact with the extension portion 12b to cool the gas captured in the extension portion 12b, and a metal plate made of aluminum with excellent thermal conductivity and having a refrigerant circulation tube provided therein or a metal plate made of aluminum with excellent thermal conductivity and having a Peltier element may be used.

Furthermore, it is preferable for the area of each of the first auxiliary plate 210 and the second auxiliary plate 220 to be sufficient to completely cover the extension portion 12b in order to ensure tight contact with the entirety of one surface or the other surface of the extension portion 12b.

In the first embodiment, the first driving shaft 111, the second driving shaft 121, the third driving shaft 211, and the fourth driving shaft 221 may be independently driven.

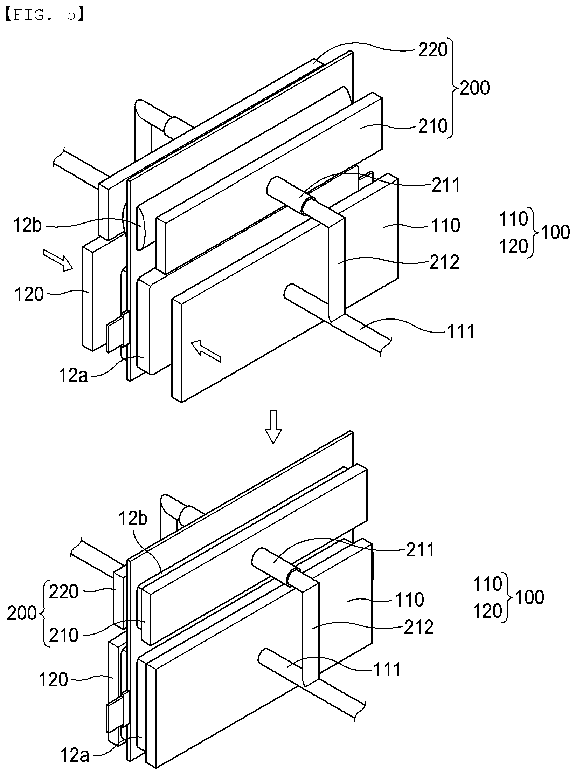

FIG. 5 is a perspective view illustrating a pouch-shaped secondary battery pressing apparatus according to a second embodiment of the present invention,

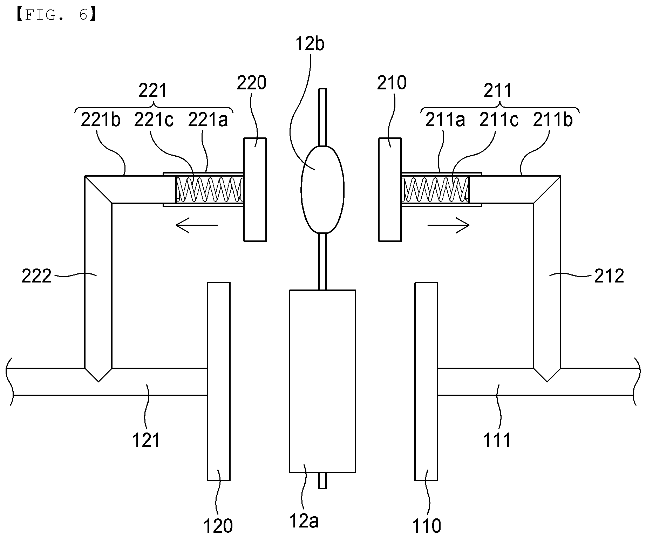

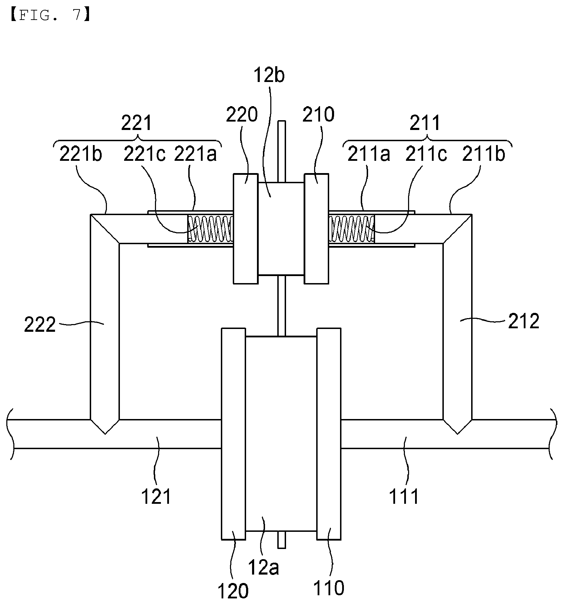

FIG. 6 is a side view of the pouch-shaped secondary battery pressing apparatus shown in FIG. 5 before a pressing plate and an auxiliary plate are in tight contact with a secondary battery, and FIG. 7 is a side view of the pouch-shaped secondary battery pressing apparatus shown in FIG. 5 after the pressing plate and the auxiliary plate are in tight contact with the secondary battery.

The pouch-shaped secondary battery pressing apparatus according to the second embodiment of the present invention will be described with reference to FIGs. 5 to 7. The secondary battery pressing apparatus according to the second embodiment of the present invention may include a pair of pressing plates 100 and a pair of auxiliary plates 200, in the same manner as the first embodiment.

However, the second embodiment is different from the first embodiment in a structure for driving the pressing plates 100 and auxiliary plates 200, and therefore only a different configuration will hereinafter be described.

A third driving shaft 211 is provided on one surface of a first auxiliary plate 210, i.e., the surface of the first auxiliary plate that does not face one surface of an extension portion 12b, and a first connection shaft 212 configured to connect a first driving shaft 111 and the third driving shaft 211 to each other is located therebetween.

Therefore, when a separate driving means (not shown) connected to the first driving shaft 111 is operated, the first driving shaft 111 and the third driving shaft 211 are driven together. Consequently, a first pressing plate 110 and the first auxiliary plate 210 are simultaneously operated so as to move toward or away from one surface of a pocket portion 12a and one surface of an extension portion 12b, respectively.

Meanwhile, the third driving shaft 211 may include a 3a guide bar 211a extending a certain length from the first auxiliary plate 210, a 3b guide bar 211b having one side fixed to the first connection shaft 212, and a first elastic member 211c interposed between the 3a guide bar 211a and the 3b guide bar 211b.

For example, the 3a guide bar 211a may be a hollow cylindrical or prismatic bar, the 3b guide bar 211b may slide along an inner space of the 3a guide bar 211a in the state in which one end thereof is closed, and a first elastic member 211c may be located in the 3a guide bar 211a.

Of course, the 3b guide bar 211b may be hollow, and the 3a guide bar 211a may slide along an inner space of the 3b guide bar 211b in the state in which one end thereof is closed.

When the third driving shaft 211 is configured as described above, the first auxiliary plate 210 may be in tight contact with the extension portion 12b before gas is captured in the extension portion or in an initial capture stage, whereby it is possible to rapidly lower the temperature of the gas and to inhibit excessive expansion of the extension portion 12b.

A fourth driving shaft 221 is provided on the other surface of the first auxiliary plate 210, i.e., the surface of the first auxiliary plate that does not face the other surface of the extension portion 12b, and a second connection shaft 222 configured to connect a second driving shaft 121 and the fourth driving shaft 221 to each other is located therebetween.

Therefore, when a separate driving means (not shown) connected to the second driving shaft 121 is operated, the second driving shaft 121 and the fourth driving shaft 221 are driven together. Consequently, a second pressing plate 120 and a second auxiliary plate 220 are simultaneously operated so as to move toward or away from the other surface of the pocket portion 12a and the other surface of the extension portion 12b, respectively.

Meanwhile, the fourth driving shaft 221 may include a 4a guide bar 221a extending a certain length from the second auxiliary plate 220, a 4b guide bar 221b having one side fixed to the second connection shaft 222, and a second elastic member 221c interposed between the 4a guide bar 221a and the 4b guide bar 221b.

For example, the 4a guide bar 221a may be a hollow cylindrical or prismatic bar, the 4b guide bar 221b may slide along an inner space of the 4a guide bar 221a in the state in which one end thereof is closed, and a second elastic member 221c may be located in the 4a guide bar 221a.

Of course, the 4b guide bar 221b may be hollow, and the 4a guide bar 221a may slide along an inner space of the 4b guide bar 221b in the state in which one end thereof is closed.

When the fourth driving shaft 221 is configured as described above, the second auxiliary plate 220 may be in tight contact with the extension portion 12b before gas is captured in the extension portion or in an initial capture stage, whereby it is possible to rapidly lower the temperature of the gas and to inhibit excessive expansion of the extension portion 12b.

Meanwhile, each of the first elastic member 211c and the second elastic member 221c may be a coil spring; however, the elastic member is not particularly restricted as long as the elastic member can perform the same function.

Next, a pouch-shaped secondary battery pressing method according to the present invention will be described. The pouch-shaped secondary battery pressing method according to the present invention includes (S1) a step of locating a secondary battery between a pair of pressing plates and (S2) an activation step of charging and discharging the secondary battery while moving the pair of pressing plates to press the secondary battery, and may further include a step of locating a pair of second auxiliary plates on both surfaces of an extension portion of a battery case particularly before step (S2).

It is preferable for the pair of second auxiliary plates to be cooling members configured to lower the temperature of gas captured in the extension portion. Here, the temperature of the cooling member is not particularly limited as long as it is possible to lower the temperature of the captured gas for volume reduction.

Meanwhile, the pair of second auxiliary plates located on both surfaces of the extension portion of the battery case may be in tight contact with the extension portion, and may press the extension portion with a certain force in order to inhibit excessive expansion of the extension portion.

Although the specific details of the present invention have been described in detail, those skilled in the art will appreciate that the detailed description thereof discloses only preferred embodiments of the present invention and thus does not limit the scope of the present invention. Accordingly, those skilled in the art will appreciate that various changes and modifications are possible, without departing from the category and the technical idea of the present invention, and it will be obvious that such changes and modifications fall within the scope of the appended claims.

### (Description of Reference Symbols)

10: Secondary battery
11: Electrode lead
12: Battery case
12a: Pocket portion 12b: Extension portion
100: Pressing plate
110: First pressing plate
111: First driving shaft
120: Second pressing plate
121: Second driving shaft
200: Auxiliary plate
210: First auxiliary plate
211: Third driving shaft
211a: 3a guide bar 211b: 3b guide bar
211c: First elastic member
212: First connection shaft
220: Second auxiliary plate
221: Fourth driving shaft
221a: 4a guide bar 221: 4b guide bar
221c: Second elastic member
222: Second connection shaft

## Claims

1. A pouch-shaped secondary battery pressing apparatus for pressing a pouch-shaped secondary battery, the pouch-shaped secondary battery comprising a battery case having a pocket portion to receive an electrode assembly and an extension portion to capture gas generated in an activation step, the pouch-shaped secondary battery pressing apparatus comprising:
a pair of pressing plates located so as to face one surface and the other surface of the pocket portion of the battery case; and
a pair of auxiliary plates located so as to face one surface and the other surface of the extension portion of the battery case.

2. The pouch-shaped secondary battery pressing apparatus according to claim 1, wherein the pair of auxiliary plates include a cooling member.

3. The pouch-shaped secondary battery pressing apparatus according to claim 2, wherein
the pair of auxiliary plates comprise a first auxiliary plate facing the one surface of the extension portion and a second auxiliary plate facing the other surface of the extension portion, and
the pair of auxiliary plates are driven to press the extension portion when the extension portion expands due to gas capture.

4. The pouch-shaped secondary battery pressing apparatus according to claim 3, wherein
the pair of pressing plates comprise a first pressing plate facing the one surface of the pocket portion and a second pressing plate facing the other surface of the pocket portion,
a first driving shaft is provided on one surface of the first pressing plate and a second driving shaft is provided on the other surface of the second pressing plate, and
a third driving shaft is provided on one surface of the first auxiliary plate and a fourth driving shaft is provided on the other surface of the second auxiliary plate.

5. The pouch-shaped secondary battery pressing apparatus according to claim 4, wherein the first driving shaft, the second driving shaft, the third driving shaft, and the fourth driving shaft are independently driven.

6. The pouch-shaped secondary battery pressing apparatus according to claim 4, wherein the first driving shaft and the third driving shaft are driven together.

7. The pouch-shaped secondary battery pressing apparatus according to claim 6, comprising a first connection shaft configured to connect the first driving shaft to the third driving shaft.

8. The pouch-shaped secondary battery pressing apparatus according to claim 7, wherein the third driving shaft comprises a 3a guide bar extending a predetermined length from the first auxiliary plate, a 3b guide bar having one side fixed to the first connection shaft, and a first elastic member interposed between the 3a guide bar and the 3b guide bar.

9. The pouch-shaped secondary battery pressing apparatus according to claim 8, wherein the first elastic member is a coil spring.

10. The pouch-shaped secondary battery pressing apparatus according to claim 4, wherein the second driving shaft and the fourth driving shaft are driven together.

11. The pouch-shaped secondary battery pressing apparatus according to claim 10, comprising a second connection shaft configured to connect the second driving shaft to the fourth driving shaft.

12. The pouch-shaped secondary battery pressing apparatus according to claim 11, wherein the fourth driving shaft comprises a 4a guide bar extending a predetermined length from the second auxiliary plate, a 4b guide bar having one side fixed to the second connection shaft, and a second elastic member interposed between the 4a guide bar and the 4b guide bar.

13. The pouch-shaped secondary battery pressing apparatus according to claim 12, wherein the second elastic member is a coil spring.

14. A pouch-shaped secondary battery pressing method using the pouch-shaped secondary battery pressing apparatus according to any one of claims 1 to 13, the pouch-shaped secondary battery pressing method comprising:
(S1) a step of locating a secondary battery between the pair of pressing plates; and
(S2) an activation step of charging and discharging the secondary battery while moving the pair of pressing plates to press the secondary battery, wherein
the pouch-shaped secondary battery pressing method further comprises a step of locating a pair of second auxiliary plates each constituted by a cooling member on both surfaces of an extension portion of a battery case before step (S2).

15. The pouch-shaped secondary battery pressing method according to claim 14, wherein, in step (S2), the pair of second auxiliary plates is in tight contact with the extension portion.
